# EUROPEAN PATENT SPECIFICATION

(11) **EP 2 505 111 B1**
(45) Date of publication and mention of the grant of the patent: **29.04.2015**
(21) Application number: 09851695.8
(22) Date of filing: 25.11.2009
(51) Int. Cl.: A47L 9/00

(54) **CANISTER TYPE VACUUM CLEANER**
BODENSTAUBSAUGER
ASPIRATEUR DE TYPE TRAINEAU

(43) Date of publication of application: 03.10.2012
(73) Proprietor: LG Electronics Inc., Yeongdeungpo-gu Seoul 150-721 (KR)
(72) Inventor: KIM, Eung Dal, Changwon-si Gyeongsangnam-do 641-711 (KR); CHONG, Chung Ook, Changwon-si Gyeongsangnam-do 641-711 (KR)
(74) Representative: Urner, Peter
(86) International application number: PCT/KR2009/006967
(87) International publication number: WO 2011/065598

(56) References cited:
- EP-A2- 0 983 874
- WO-A1-02/074150
- WO-A2-2007/050323
- DE-A1-102008 019 976
- DE-U1-202005 012 682
- DE-U1-202005 012 682
- GB-A- 2 340 803
- JP-A- 2002 177 170
- JP-A- 2002 177 170
- JP-A- 2008 290 638
- JP-A- 2009 050 594
- US-A1- 2005 055 792
- US-A1- 2007 272 463
- US-A1- 2008 018 167
- US-A1- 2008 134 458
- US-B2- 7 568 536

## Description

### [Technical Field]

The present invention relates to a canister type vacuum cleaner, more specifically, to a canister type vacuum cleaner that includes a body or suction nozzle having an efficient direction change.

### [Background Art]

Vacuum cleaners are home appliances that are able to suck external dust by using a vacuum pressure generated by a motor provided in each of their bodies.

Such vacuum cleaners may be categorized based on their shapes into canister types and upright types. A canister type vacuum cleaner relating to the present invention includes a body having a motor, a dust collection device, and a dust separation device provided therein, a suction hose and a suction nozzle provided in an end of the suction hose.

At least one wheel member is provided in a lower or side surface of the body. If a user pulls the suction hose, the body will move toward the direction of the pulling.

A wheel member is provided in a lower surface of the suction nozzle. If the user clears dust while moving the suction nozzle forward and rearward, the suction nozzle will move forward and rearward with help of the wheel member in a rolling contact with the floor.

US 2007/0272463 A1 relates to an omni-directional robot cleaner, composed of a platform and a plurality of driving units for driving and controlling the movement of the platform, in which the platform further comprises: a sensing unit, for obstacle detection; a-cleaning unit, for collecting and removing dust and dirt; a processing unit, capable of receiving signals transmitted from the sensing unit while planning and mapping a travel path accordingly; and a power unit, for providing power to the omni-directional robot cleaner while managing the same. Moreover, each driving unit of the plural driving units is comprised of an omni-directional wheel and an actuator for driving the corresponding omni-directional wheel to rotate omni-directionally, by which the platform is enabled to move continuously while changing its moving direction simultaneously so as to free the robotic cleaner from the shortcomings of those conventional autonomous cleaner, such as poor maneuverability, poor mobility and insufficient degree-of-freedom regarding to the driving of the cleaner. Therefore, not only the operation mobility of the robotic cleaner is enhanced, but also the moving agility of the same is greatly improved.

DE 20 2005 012 682 U1 relates to a wheel, in particular to a wheel for heavy duty vehicles or floor-borne vehicles.

### [Disclosure]

### [Technical Problem]

When moved by the rolling motion of the wheel member, the body can move freely in a predetermined space without obstacles. If it collides against an obstacle during the motion, a direction of the force applied to the body by the collision will change the direction of the rolling motion of the wheel member such that a sliding friction, not the rolling motion, may be generated between the lower surface of the wheel member and the floor.

Because of that, the body happens to be upturned and the wheel member will not be rolled by its sliding friction but dragged in a surface contact with the floor.

Furthermore, if the body is located in rear of the user, the user should inconveniently hold the body and change the direction of the body to move the body in another direction. Especially, if the body is located in a limited space, this inconvenience will emerges noticeably.

In the meanwhile, if the user tries to move the body or suction nozzle toward a diagonal or orthogonal direction with respect to the original direction, such the movement trajectory draws an arc only to enlarge a rotation radius thereof.

### [Technical Solution]

To solve the problems, an object of the present invention is to provide a canister type vacuum cleaner including a suction nozzle having a movement direction changed smoothly and quickly, even in case of colliding with an obstacle.

The objects are solved by the features of the independent claim. According to one aspect, a canister type vacuum cleaner includes a body; a wheel member rotatably provided in the body and supporting the body, the wheel member including a main rotation member rotatably provided in the body; and an auxiliary rotation member rotatably provided in the main rotation member to be rotated along a predetermined rotational direction different from a rotational direction of the main rotation member.

In another aspect of the present invention, a canister type vacuum cleaner includes a suction nozzle; a wheel member provided in the suction nozzle, the wheel member including a main rotation member rotatably provided in the suction nozzle; and a plurality of auxiliary rotation members rotatably provided in the main rotation member.

### [Advantageous Effects]

The present invention has following advantageous effects.

According to the canister type vacuum cleaner, the movement direction of the body or the suction nozzle may be changed smoothly. A rotational radius with respect to the direction change is reduced, compared with the conventional vacuum cleaner. As a result, the movement direction can be changed even in a narrow cleaning space.

Furthermore, if the body collides with an obstacle, the movement direction of the body may be changed quickly toward the direction of the shock caused by the collision and then it may be re-changed quickly toward a direction intended by a user.

### [Description of Drawings]

The accompanying drawings, which are included to provide further understanding of the disclosure and are incorporated in and constitute a part of this application, illustrate embodiments of the disclosure and together with the description serve to explain the principle of the disclosure.

In the drawings:
FIG. 1 is a side-sectional view illustrating a canister type vacuum cleaner having a wheel member mounted thereto according to an exemplary embodiment of the present invention;
FIG. 2 is a perspective view illustrating a first wheel member of the wheel member according to an embodiment of the present invention;
FIG. 3 is a perspective view illustrating a first wheel member of the wheel member according to another embodiment of the present invention;
FIG. 4 is a perspective view illustrating a second wheel of the wheel member according to an embodiment of the present invention;
FIG. 5 is a side-sectional view illustrating a canister type vacuum cleaner having a wheel member mounted thereto;
FIG. 6 is a plane view illustrating the canister type vacuum cleaner having the wheel member mounted thereto according to the second embodiment of the present invention;
FIG. 7 is a side-sectional view illustrating a canister type vacuum cleaner having a wheel member mounted thereto according to a third embodiment of the present invention;
FIGS. 8A and 8B are a side-sectional view and a plane view illustrating a canister type vacuum cleaner having a wheel member mounted thereto, respectively;
FIGS. 9A and 9B are a side-sectional view and a plane view illustrating a canister type vacuum cleaner having a wheel member mounted thereto, respectively;
FIG. 10 is an exploded perspective view illustrating a canister type vacuum cleaner having a wheel member mounted thereto;
FIG. 11 is a diagram illustrating an operational state of the canister type vacuum cleaner having the wheel member mounted thereto according to the present invention;
FIG. 12 is a perspective view illustrating a suction nozzle having a wheel member mounted thereto;
FIG. 13 is an exploded perspective view illustrating the suction nozzle having the wheel member mounted thereto; and
FIG. 14 is a plane view illustrating the operational view of the suction nozzle having the wheel member mounted thereto.

### [Best Mode]

As follows, an exemplary embodiment of the present invention will be described in the accompanying drawings.

A vacuum cleaner according to the exemplary embodiment of the present thereto; device 11 provided in the body 10 and a wheel member 100 provided in side and lower surfaces of the body 10.

The plurality of the wheel members 100 are provided and specifically, the wheel members 100 includes a first wheel member 110 provided in a lower portion of the body 10 and a second wheel member 120 provided in a side portion of the body 10. The size of the second wheel member 120 is larger than the size of the first wheel member 110.

Here, the wheel member 100 includes a main rotation member 111 and 121 rotatably provided in the body 10 and a plurality of auxiliary rotation members 112 and 122 arranged in an outer portion of the main rotation member 11 and 121.

If Characteristics of such the wheel member 100 will be described, a rotational direction of the main rotation member 111 and 121 and is designed different from a rotational direction of the auxiliary rotation members 112 and 133. As a result, the wheel member 100 may be movable freely according to a direction which a force applied to the body 10 toward.

That is, if the user pushes the body 10 by using his/her hand or foot forward and rearward, the body 10 may movable forward and rearward according to the rotation of the main rotation member 111 and 121.

If the user moves the body 10 rightward and leftward, the body 10 may movable leftward and rightward according to the rotation of the auxiliary rotational members 112 and 122.

A rotational shaft supporter 113 and 123 is provided in a center of the main rotation member 111 and 121 and the rotational shaft supporter 113 and 123 is rotatably coupled to the body 10.

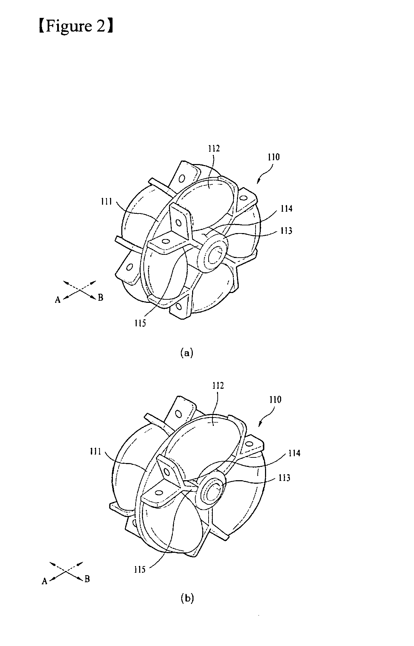

As shown in FIGS. 2A and 2B,the plurality of the auxiliary rotation members 112 are provide in the main rotation member 111 of the first wheel member and accommodation parts 114 are provided in the main rotation member to accommodate the auxiliary rotation members 112.

Here, the accommodation parts are provided as many as the auxiliary rotation members 112 and they are partitioned off by a partition wall 115.

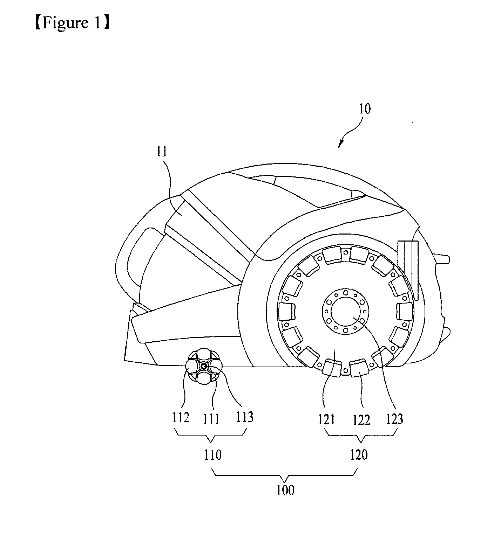

The partition wall 115 extends from the rotational shaft supporter 113 in a radial direction and an end of the partition wall 115 is divided into two portions to support the load of the body (10, see FIG. 1) dividedly.

The auxiliary rotation members 112 are rotatably coupled to the partition wall 15 and the auxiliary rotation members 112 have a roller-shape.

If the main rotation member 11 is rotated toward a predetermined direction, each auxiliary rotation member may have a diameter larger gradually toward its center from its end. That is, the auxiliary rotation member is shaped like a raised pot.

The auxiliary rotation members 112 may be arranged in two lines with respect to the main rotation member 111 and it is preferable that one of the auxiliary rotation members 112 arranged in a predetermined line is alternative with respect to another one arranged in the other line.

This is because at least one of the auxiliary rotation members 112 had better be contactable with the floor in order to move right after the force is applied toward the rotational direction of the auxiliary rotation member 112.

In the meanwhile, an outermost portion of each auxiliary rotation member 112 is extended further than an outermost portion of the main rotation member 111 to be in contact with the floor.

As a result, if there is a momentary direction change during the movement toward the rotational direction of the main rotation member 111, the body 10 may be movable toward the rotational direction of the auxiliary rotation member 112.

FIG. 2B illustrates a first wheel member having auxiliary rotation members 112 more and larger than those of the auxiliary rotation members 112 shown in FIG. 2A.

Here, if the force is applied toward 'A' direction, the main rotation member 111 is rotated toward'A'direction and the auxiliary rotation members 112 are simultaneously moved toward 'A'direction momentarily in contact with the floor, and vice verse.

If the force is applied toward'B'direction, the auxiliary rotation members 112 in contact with the floor are rotated and the overall first wheel member 112 is rotated toward'B'direction. Here, the main rotation member 111 is not rotation-moved or rotation-moved little.

As a result, the wheel member shown in FIGS. 2A and 2B may be movable freely in all of the directions according to the user's intention.

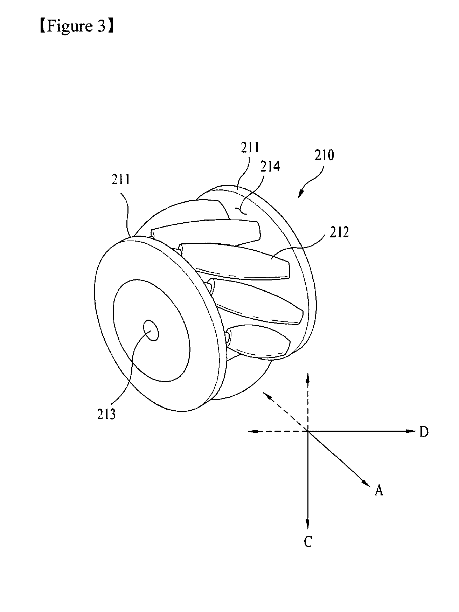

FIG. 3 is a diagram illustrating another embodiment of the first wheel member relatively smaller than that of the above embodiment.

The first wheel member 210 according to this embodiment includes main rotation members 211 spaced apart a predetermined distance from each other and a plurality of auxiliary rotation members 212 arranged between the main rotation members 211 in a diagonal appearance.

A rotational shaft supporter 213 is provided in a center of the main rotation member 211.

Here, the plurality of the auxiliary rotation members 212 may be arranged adjacent to each other. An outermost portion of each auxiliary rotation member 212 may be extended further than an outermost portion of the main rotation member 211.

This is because a fast direction change of the auxiliary rotation members 212 has to be embodied.

According to this embodiment, a movement direction of the main rotation member 211 is referenced to as'A'and a movement direction of the auxiliary rotation members 212 provided diagonal with respect to 'A'direction is referenced to as'B'. If the arrangement of the auxiliary rotation members 212 is reverse, a movement direction of the reversely arranged auxiliary rotation members 212 is referenced to as'C'.

In case the first wheel member according to this embodiment and the first wheel member arranged reversely with respect to the arrangement of the auxiliary rotation members 212 according to this embodiment are mounted to the body, respectively, the movement direction of the body may be opposite to A, B and C direction. That is, the body may be movable freely in 6 directions.

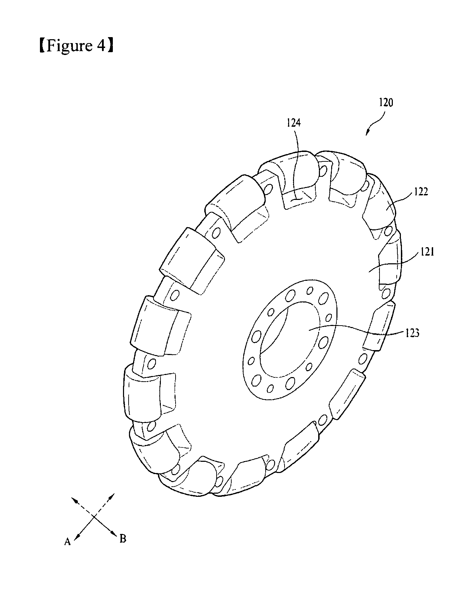

FIG. 4 is a diagram illustrating the second wheel member 120 of the wheel member according to the present invention.

As mentioned above, the second wheel member 120 includes the main rotation member 121 having the rotational shaft supporter 123 and the plurality of the auxiliary rotation members 122 rotatably provided in the outer portion of the main rotation member 121.

Accommodation parts 124 are provided in the main rotation member 121 to accommodate the auxiliary rotation members 122.

Here, the auxiliary rotation members 122 may be arranged in a circumferential portion of the main rotation member 121, spaced apart a predetermined distance from each other. Also, an outermost portion of each auxiliary rotation members 122 may be extended further outward than an outermost portion, that is, an outer circumferential surface of the main rotation member 121.

This is because the rotational direction has to be changed quickly between the main rotation member 121 and the auxiliary rotation members 122 as mentioned above.

Compared to the auxiliary rotation members 112 provided in the first wheel member 110 shown in FIG. 2, a shape of the auxiliary rotation member 122 arranged in the second wheel member 120 looks like a cylinder having a regular sectional diameter.

This is because a rate between the length of the auxiliary rotation member 112 of the first wheel member 110 and the circumference of the first wheel member 110 is different from a rate between the length of the auxiliary rotation member 122 and a circumference of the second wheel member 120.

That is, the length of the auxiliary rotation member 112 of the first wheel member 110 shown in FIG. 2 is approximately 1/7∼1/8 of the overall circumference of the first wheel member and the length of the auxiliary rotation member 122 of the second wheel member 120 shown in FIG. 4 is 1/20∼1/25 of the circumference of the second wheel member 120.

As the circumference of the wheel member is different from the length of the auxiliary rotation member more noticeably, the shape of the auxiliary rotation member may be a cylindrical roller.

Here, the body may be movable freely along 'A'that is a rotational direction of the main rotation member 121 and 'B'that is a rotational direction of the auxiliary rotation members 122 and along opposite directions to theses directions. If the auxiliary rotation members 122 are arranged in a diagonal direction, the body may be movable freely in more directions.

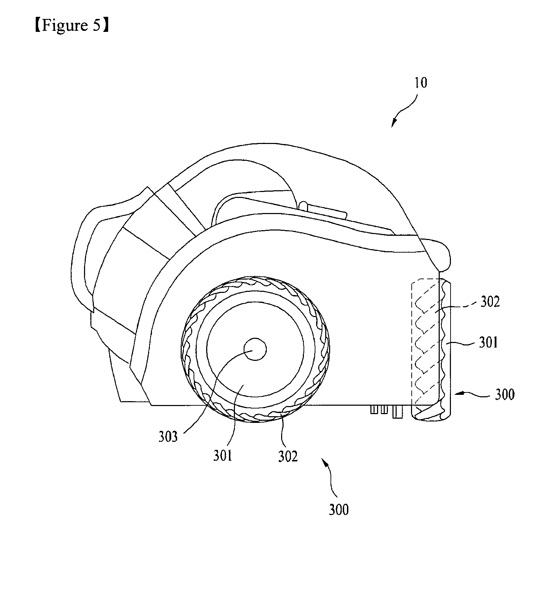

FIG. 5 is a plurality of wheel members 300 mounted in side and rear portions of the body 10.

Here, the size and arrangement of the wheel member 300 arranged in the body 10 is similar to the size of the second wheel member 120 and the arrangement of the auxiliary rotation members 122. According to this embodiment, auxiliary rotation members 302 are arranged in an outer circumferential portion of a main rotation member 301 in a diagonal direction.

The main rotation member 301 of the wheel member 300 provided in the side portion of the body 10 is for the forward and rearward movement of the body 10 and the main rotation member 301 of the wheel member 300 provided in the rear portion of the body 10 is for rightward and leftward movement of the body 10.

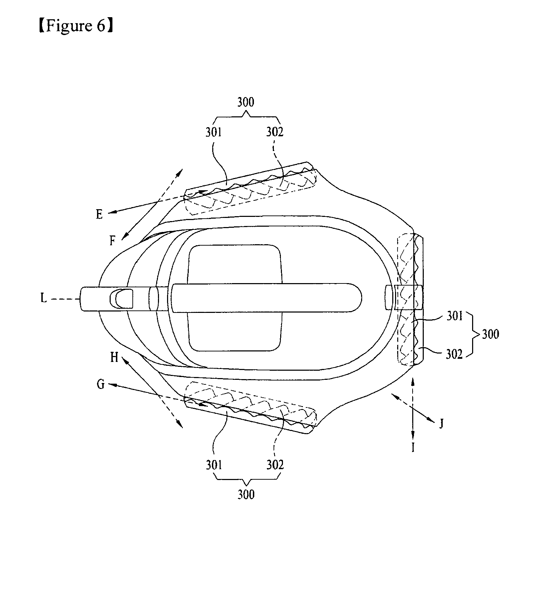

As shown in FIG. 6, the main rotation member 301 and the auxiliary rotation members 302 are arranged in a diagonal direction with respect to each other. Here, orthogonal arrangement may be considerable.

The main rotation members 301 provided in both opposite side portions of the body 10 may be arranged diagonally with respect to a center line (L) of the body 10.

The main rotation member 301 provided in the rear portion of the body 10 may be arranged orthogonally with respect to the center line (L).

With this arrangement, the movement direction of the body 10 includes a rotational direction of the main rotation member 201 provided in the side portion of the body 10 and an opposite direction as shown in'E'and'G'.

'E'and'G'may be forward, with being diagonal with respect to the center line (L) and thus they may be forward directions and the opposite direction may be a rearward direction.

Furthermore, there are'F'and'H'that are rotational directions of the auxiliary rotation members 302 diagonal with respect to'E'and'G' and opposite directions to'F'and'H'.

There are'I'that is the rotational direction of the main rotation member 301 provided in the rear portion of the body 10 and opposite direction to'I'. Also, there are'j'that is the rotational direction of the auxiliary rotation members 302 provided in the main rotation member 301 and an opposite direction to'J'.

As a result, if the rotational direction of the main rotation members 301 is arranged different from each other, with the plurality of the wheel members 300 mounted to the body 10 according to the embodiment shown in FIG. 6, quite a lot of movement directions may be generated.

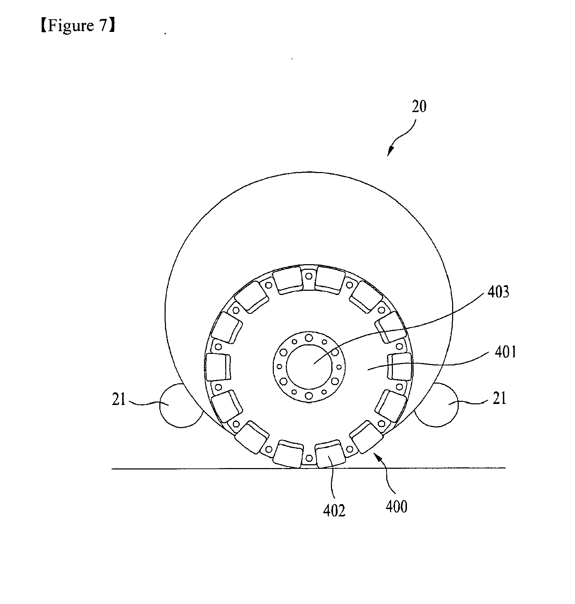

FIG. 7 is a diagram illustrating a wheel member 400 mounted to another type of the canister vacuum cleaner.

Here, a canister type vacuum cleaner shown in FIG. 7 includes a body 20 and supporters 21 provided in front and rear portions of the body 20, spaced apart a predetermined distance from the floor, to prevent the body 20 from falling.

Wheel members 400 are rotatably provided in both opposite side portions of the body 10. Here, the wheel members are provided in both sides of the body 20 and thus they are supported by the supporters 21 forward and rearward.

That is, if the body 20 is inclined forward or rearward too much, the supporters 21 will contact with the floor and the body 21 is prevented from falling.

Like the above wheel members, the wheel member 400 includes a main rotation member 401 having rotational shaft supporters and a plurality of auxiliary rotation members 402 provided in outer circumferential portions of the main rotation member 401, roller-shaped in contact with the floor.

Such the configuration enables the movement of the body 20 to change quickly in the rotational direction of the main rotation member 401 or the auxiliary rotation members 402.

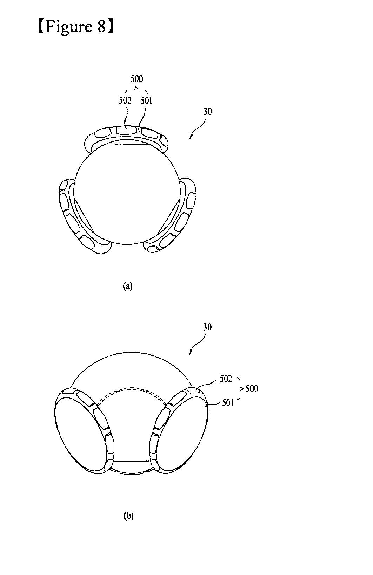

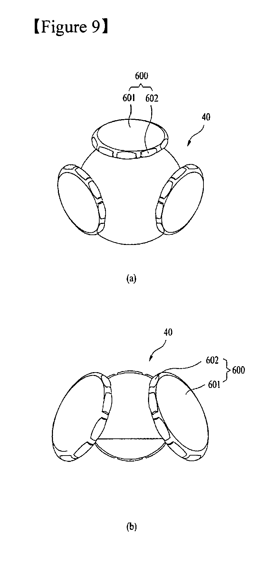

FIGS. 8 and 9 are diagrams illustrating a canister type vacuum cleaner having diverse movement directions, respectively. FIGS. 8A and 8B show the wheel member 500 is arranged in three directions with respect to a side of a body 30.

According to this embodiment, the wheel member 500 maybe arranged oblique upward. Here, a wheel member 500 includes a main rotation member 501 and a plurality of auxiliary rotation members 502 that are movable freely along rotational directions, respectively.

FIGS. 9A and 9B are diagrams illustrating a wheel member 600 arranged in diverse directions with respect to a side of a body. Here, the wheel member 600 includes a main rotation member 601 and a plurality of auxiliary rotation members 602.

The wheel member 600 may be arranged oblique downward, with surrounding a side of the body 40.

Detailed configuration of the wheel member 600 shown in FIGS. 8 and 9 is similar to the detailed configuration of the second wheel member 120 shown in FIG. 4 and it will be omitted accordingly.

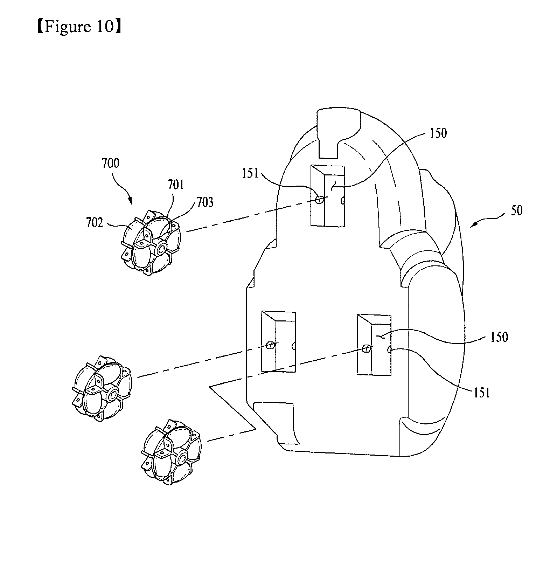

FIG. 10 is a diagram illustrating a wheel member arranged in a different type.

Here, a wheel member 700 similar to the first wheel member 110 shown in FIG. 2 is mounted to a body 50.

That is, a coupling groove 150 is provided in the body 50 to couple the wheel member 700 thereto. Here, the plurality of the coupling grooves may be provided corresponding to the plurality of the wheel members 700.

The wheel member 700 includes a main rotation member 701 and a plurality of auxiliary rotation members 702 and a rotational shaft supporter 703 is provided in a center of the main rotation member 701.

A rotational shaft 151 extended from an inner surface of the coupling groove 150 is supportedly inserted in the rotational shaft supporter 703.

According to this embodiment, the wheel members 700 are arranged in three locations of a lower surface of the body 50 to disperse the load and the number of the wheel members may be diversified.

As follows, operation of the body of the canister type vacuum cleaner including the wheel member according to the present invention will be described.

Here, the embodiment which will be the operational object is the vacuum cleaner shown in FIG. 1 and the present invention is not limited thereto, applicable to the other embodiments.

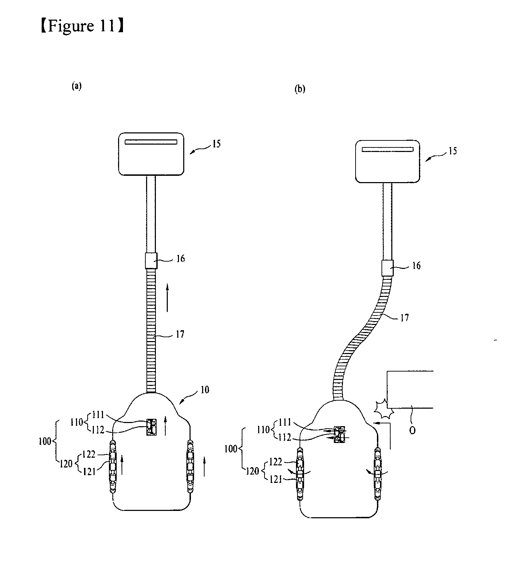

As shown in FIG. 11A, if the user moves forward with holding the handle 16 provided in the suction hose 17 to move the suction nozzle 15, the first wheel member 110 and the second wheel member 120 provided in the body 10 will be rotated.

Especially, the first wheel member 110 and the second wheel member 120 are rotated toward the rotational direction of the main rotation members 111 and 121, respectively, and they may help the forward movement of the body 10.

If the user pushes by using his/her hand or foot, the body may be movable rearward smoothly.

Here, the auxiliary rotation members 112 and 122 may be rotated toward the above direction little or not at all, even with contacting with the floor.

As shown in FIG. 11B, in case the body 10 collides against an obstacle (O) while the user pulls the body 10, or the user pushes the body 10 sideward, the movement of the wheel member 100 (110 and 120) is different from the movement shown in FIG. 11A.

That is, the auxiliary rotation members 112 and 122 are rotated toward the direction to which the shock applied by the obstacle (O) or the force applied by the user, which is a left direction here, only to move the body 10 toward this direction.

The rotational direction of the auxiliary rotation members 112 and 122 is set different from that of the main rotation member 111 and 121. However, if this rotational direction of such the auxiliary rotation members 112 and 122 is identical or similar to the direction of the external force, the auxiliary rotation members are rotated toward the direction.

Hence, if given the force toward the rotational direction of the main rotation member 111 and 121, the body 10 will move toward the main rotation member 111 and 121 again.

In case the direction of the force moving the body 10 is changed momentarily, the body 10 may correspondingly move toward the direction of the force with the help of the main rotation member 111 and 121 and the auxiliary rotation members 112 and 122.

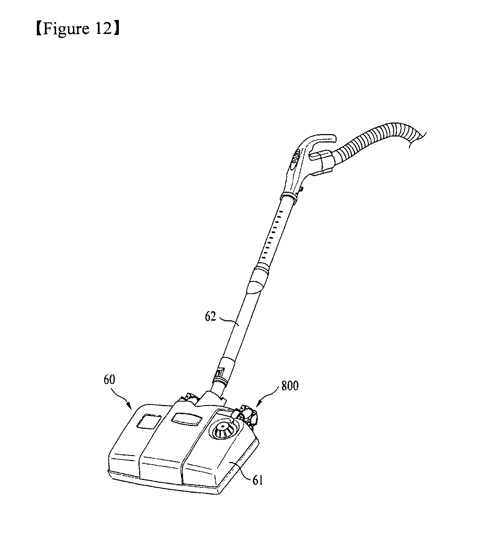

FIG. 12 is a diagram illustrating a wheel member mounted to the suction nozzle 60 of the canister type vacuum cleaner.

Here, the suction nozzle 60 includes a suction nozzle case 61 and a wheel member 800 rotatably mounted to a rear portion of the suction nozzle case 61.

Here, a suction tube 62 is provided in a rear portion of the suction nozzle 60 and the wheel member 800 is mounted in a predetermined portion adjacent to a connection portion between the suction tube 62 and the suction nozzle 60.

The position of the wheel member 800 is not limited to the above portion and it may be located in an inner, side or front portion of the suction nozzle case 61.

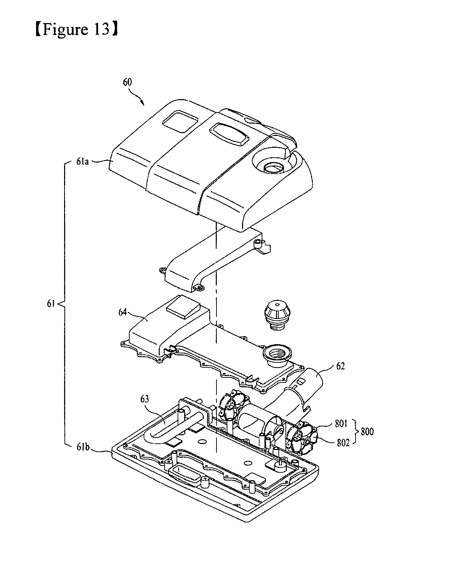

If a heater 63 for steam generation to steam-clean and a water tank 64 or an agitator and a motor for directly driving the agitator are mounted in the suction nozzle case 61 to as shown in FIG. 13, the weight of the suction nozzle is quite a lot.

Because of that, the configuration of the wheel member 800 is necessary for the user to vacuum-clean with moving the quite heavy suction nozzle 60.

The configuration of the wheel member 800 is similar to that of the first wheel member 110 shown in FIG. 2. That is, the wheel member 800 includes a main rotation member 801 and a plurality of auxiliary rotation members 802 rotatbly mounted to the main rotation member 801.

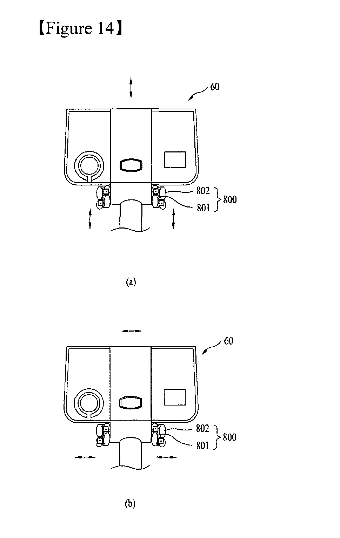

As shown in FIGS. 14A and 14B, the rotational direction of the main rotation member 801 is substantially identical to the forward/rearward movement direction of the suction nozzle 60 and the rotational direction of the auxiliary rotation member 802 is substantially identical to the leftward/rightward movement direction of the suction nozzle 60.

This embodiment presents that the rotational direction of the main rotation member 801 is orthogonal to that of the auxiliary rotation members 802 and the present invention is not limited thereto. The rotational direction of the auxiliary rotation members 802 may be diagonal to that of the main rotation member 801.

It will be apparent to those skilled in the art that various modifications and variations can be made in the present invention without departing from the scope of the invention. Thus, it is intended that the present invention cover the modifications and variations of this invention provided they come within the scope of the appended claims and their equivalents.

## Claims

1. A canister type vacuum cleaner comprising:
a body (10);
a wheel member (100) rotatably provided in the body (10) and supporting the body (10), the wheel member (100) comprising:
a main rotation member (111, 121) rotatably provided in the body (10); and
an auxiliary rotation member (112, 122) rotatably provided in the main rotation member (111, 121) to be rotated in a predetermined rotational direction different from a rotational direction of the main rotation member (111, 121),
wherein the main rotation member (111, 121) comprises an accommodation part (114, 124) accommodating the auxiliary rotation member (112, 122) and the auxiliary rotation member (112, 122) is roller-shaped and installed in the accommodation part (114, 124),
wherein a plurality of the wheel members (100) is provided and the plurality of the wheel members (100) is rotatably arranged to at least one of the side and lower portions of the body (10),
**characterized in that** the wheel members (100) comprise,
a first wheel member (110); and
a second wheel member (120) having a predetermined size larger than the size of the first wheel member (110), and
the first wheel member (110) is rotatably arranged to the lower portion of the body (10) and the second wheel member (120) is rotatably arranged to the side portion of the body (10);
wherein the main rotation member (111, 121) of the first wheel member (110) comprises;
a rotational shaft supporter (113) that is rotatably coupled to the body (10); and
partition walls (115) that are provided in the rotational shaft supporter (111, 121) to form the accommodation part (114).

2. The canister type vacuum cleaner as claimed in claim 1, wherein the auxiliary rotation member (112) is arranged to be rotated along a predetermined rotational direction that is orthogonal to a rotational direction of the main rotation member (111).

3. The canister type vacuum cleaner as claimed in claim 1, wherein the auxiliary rotation member (112) is arranged to be rotated along a predetermined rotational direction that is diagonal to a rotational direction of the main rotation member (111).

4. The canister type vacuum cleaner as claimed in claim 1, wherein at least one wheel member (100) provided in the side portion of the body (10) is arranged oblique with respect to the side portion of the body (10).

5. The canister type vacuum cleaner as claimed in claim 1,
wherein the accommodation parts (114) are provided between the partition walls to accommodate the auxiliary rotation members (112) therein rotatably and,
the auxiliary rotation member (112) accommodated in the accommodation part (114) is rotatably coupled to the partition wall.

6. The canister type vacuum cleaner as claimed in claim 1,
wherein the partition wall is extended outward from a rotational shaft supporter (113) of the first wheel member (110) and,
an end of the partition wall is divided in two ways to disperse the load in case of contacting a floor.

7. The canister type vacuum cleaner as claimed in claim 1,
wherein the auxiliary rotation member (112) of the first wheel member (110) is configured to be in shape of Rugby ball or raised pot.

8. The canister type vacuum cleaner as claimed in claim 1, wherein auxiliary rotation members (112) of the second wheel member (120) are arranged along an outer circumferential surface of a main rotation member (111) in a single line.

9. The canister type vacuum cleaner as claimed in claim 1, wherein the plurality of the wheel member (100) are provided and rotational directions of the main rotation members (111) provided in the plurality of the wheel members (100) are same to each other.

10. The canister type vacuum cleaner as claimed in claim 1, wherein the plurality of the wheel member (100) are provided and rotational directions of the main rotation members (111) provided in the plurality of the wheel members (100) are different from each other.

11. The canister type vacuum cleaner as claimed in claim 1, wherein an outermost portion of the auxiliary rotation member (112) is extended outward further than an outermost portion of the main rotation member (111) only to maintain contact with a floor.

## Patentansprüche

1. Bodenstaubsauger, der Folgendes umfasst:
einen Körper (10);
ein Radelement (100), das in dem Körper (10) drehbar vorgesehen ist und den Körper (10) trägt, wobei das Radelement (100) Folgendes umfasst:
ein Hauptdrehelement (111, 121), das in dem Körper (10) drehbar vorgesehen ist; und
ein Hilfsdrehelement (112, 122), das in dem Hauptdrehelement (111, 121) drehbar vorgesehen ist, um in einer vorgegebenen Drehrichtung, die sich von einer Drehrichtung des Hauptdrehelements (111, 121) unterscheidet, gedreht zu werden,
wobei das Hauptdrehelement (111, 121) ein Aufnahmeteil (114, 124) umfasst, das das Hilfsdrehelement (112, 122) aufnimmt, und das Hilfsdrehelement (112, 122) rollen-förmig ist und in dem Aufnahmeteil (114, 124) angebracht ist,
wobei mehrere Radelemente (100) vorgesehen sind und die mehreren Radelemente (100) an einem seitlichen und/oder unteren Abschnitt des Körpers drehbar angeordnet ist, **dadurch gekennzeichnet, dass** die Radelemente (100) Folgendes umfassen:
ein erstes Radelement (110); und
ein zweites Radelement (120), das eine vorgegebene Größe aufweist, die größer als die Größe des ersten Radelements (110) ist, und
das erste Radelement (110) drehbar an dem unteren Abschnitt des Körpers (10) angeordnet ist und das zweite Radelement (120) drehbar an dem seitlichen Abschnitt des Körpers (10) angeordnet ist;
wobei das Hauptdrehelement (111, 121) des ersten Radelements (110) Folgendes umfasst:
einen drehbaren Wellenträger (113), der drehbar an den Körper (10) gekoppelt ist; und
Trennwände (115), die in dem drehbaren Wellenträger (111, 121) vorgesehen sind, um das Aufnahmeteil (114) zu bilden.

2. Bodenstaubsauger nach Anspruch 1, wobei das Hilfsdrehelement (112) angeordnet ist, um entlang einer vorgegebenen Drehrichtung, die senkrecht zu der Drehrichtung des Hauptdrehelements (111) ist, gedreht zu werden.

3. Bodenstaubsauger nach Anspruch 1, wobei das Hilfsdrehelement (112) angeordnet ist, um entlang einer vorgegebenen Drehrichtung, die diagonal zu der Drehrichtung des Hauptdrehelements (111) ist, gedreht zu werden.

4. Bodenstaubsauger nach Anspruch 1, wobei mindestens ein Radelement (100), das in dem seitlichen Abschnitt des Körpers (10) vorgesehen ist, in Bezug auf den seitlichen Abschnitt des Körpers (10) schräg angeordnet ist.

5. Bodenstaubsauger nach Anspruch 1,
wobei die Aufnahmeteile (114) zwischen den Trennwänden vorgesehen sind, um die Hilfsdrehelemente (112) darin drehbar aufzunehmen und
das Hilfsdrehelement (112), das in dem Aufnahmeteil (114) aufgenommen ist, drehbar an die Trennwand gekoppelt ist.

6. Bodenstaubsauger nach Anspruch 1,
wobei die Trennwand von einem drehbaren Wellenträger (113) des ersten Radelements (110) nach außen verlängert ist und
ein Ende der Trennwand in zwei Richtungen aufgeteilt ist, um im Fall einer Bodenberührung die Last zu verteilen.

7. Bodenstaubsauger nach Anspruch 1,
wobei das Hilfsdrehelement (112) des ersten Radelements (110) so konfiguriert ist, dass es Form eines Rugby-Balls oder eines erhöhten Tiegels hat.

8. Bodenstaubsauger nach Anspruch 1, wobei die Hilfsdrehelemente (112) des zweiten Radelements (120) in einer einzelnen Linie entlang einer äußeren Umfangsfläche eines Hauptdrehelements (111) angeordnet sind.

9. Bodenstaubsauger nach Anspruch 1, wobei die mehreren Radelemente (100) vorgesehen sind und die Drehrichtungen der Hauptdrehelemente (111), die in mehreren Radelementen (100) vorgesehen sind, gleich sind.

10. Bodenstaubsauger nach Anspruch 1, wobei die mehreren Radelemente (100) vorgesehen sind und die Drehrichtungen der Hauptdrehelemente (111), die in den mehreren Radelementen (100) vorgesehen sind, unterschiedlich sind.

11. Bodenstaubsauger nach Anspruch 1, wobei ein äußerster Abschnitt des Hilfsdrehelements (112) weiter nach außen verlängert ist als ein äußerster Abschnitt des Hauptdrehelements (111), nur um den Kontakt mit einem Boden aufrechtzuerhalten.

## Revendications

1. Aspirateur du type traîneau, comprenant :
un corps (10) ;
un élément formant roue (100) prévu en rotation dans le corps (10) et
supportant le corps (10), l'élément formant roue (100) comprenant :
un élément rotatif principal (111, 121) prévu en rotation dans le corps (10) ; et
un élément rotatif auxiliaire (112, 122) prévu en rotation dans l'élément rotatif principal (111, 121) pour être mis en rotation dans une direction de rotation prédéterminée différente d'une direction de rotation de l'élément rotatif principal (111, 121),
dans lequel l'élément rotatif principal (111, 121) comprend une partie de logement (114, 124) qui loge l'élément rotatif auxiliaire (112, 122),
et l'élément rotatif auxiliaire (112, 122) a la forme d'une roulette et est installé dans la partie de logement (114, 124),
dans lequel il est prévu une pluralité d'éléments formant roue (100) et
la pluralité d'éléments formant roue (100) sont agencés en rotation sur au moins une portion parmi les portions latérales et les portions inférieures du corps (10),
**caractérisé en ce que** les éléments formant roue (100) comprennent :
un premier élément formant roue (110) ; et
un second élément formant roue (120) ayant une taille prédéterminée plus grande que la taille du premier élément formant roue (110), et
le premier élément formant roue (110) est agencé en rotation sur la portion inférieure du corps (10) et le second élément formant roue (120) est agencé en rotation sur la portion latérale du corps (10) ;
dans lequel l'élément rotatif principal (111, 121) du premier élément formant roue (110) comprend :
un élément de support d'arbre rotatif (113) qui est couplé en rotation sur le corps (10), et
des parois de cloisonnement (115) qui sont prévues dans l'élément de support d'arbre rotatif (111, 121) pour former la partie de logement (114).

2. Aspirateur du type traîneau selon la revendication 1, dans lequel l'élément rotatif auxiliaire (112) est agencé pour être mis en rotation le long d'une direction de rotation prédéterminée qui est perpendiculaire à une direction de rotation de l'élément rotatif principal (111).

3. Aspirateur du type traîneau selon la revendication 1, dans lequel l'élément rotatif auxiliaire (112) et agencé pour être mis en rotation le long d'une direction de rotation prédéterminée qui est en diagonale par rapport à une direction de rotation de l'élément rotatif principal (111).

4. Aspirateur du type traîneau selon la revendication 1, dans lequel au moins un élément formant roue (100) prévu dans la portion latérale du corps (10) est agencé en oblique par rapport à la portion latérale du corps (10).

5. Aspirateur du type traîneau selon la revendication 1,
dans lequel les parties de logement (114) sont prévues entre les parois de cloisonnement pour loger les éléments rotatifs auxiliaires (112) en rotation à l'intérieur, et
l'élément rotatif auxiliaire (112) logé dans la partie de logement (114) est couplé en rotation à la paroi de cloisonnement.

6. Aspirateur du type traîneau selon la revendication 1,
dans lequel la paroi de cloisonnement s'étend vers l'extérieur depuis un élément de support d'arbre rotatif (113) du premier élément formant roue (110), et
une extrémité de la paroi de cloisonnement est divisée de deux manières pour disperser la charge dans le cas d'un contact avec le plancher.

7. Aspirateur du type traîneau selon la revendication 1,
dans lequel l'élément rotatif auxiliaire (112) du premier élément formant roue (110) est configuré pour avoir la forme d'un ballon de rugby ou d'un pot dressé.

8. Aspirateur du type traîneau selon la revendication 1, dans lequel les éléments rotatifs auxiliaires (112) du second élément formant roue (120) sont agencés le long d'une surface circonférentielle extérieure d'un élément rotatif principal (111) dans une ligne unique.

9. Aspirateur du type traîneau selon la revendication 1, dans lequel il est prévu une pluralité d'éléments formant roue (100) et les directions de rotation des éléments rotatifs principaux (111) prévus dans la pluralité d'éléments formant roue (100) sont les mêmes.

10. Aspirateur du type traîneau selon la revendication 1, dans lequel il est prévu une pluralité d'éléments formant roue (100) et les directions de rotation des éléments rotatifs principaux (111) prévus dans la pluralité d'éléments formant roue (100) sont différentes les unes des autres.

11. Aspirateur du type traîneau selon la revendication 1, dans lequel une portion tout à fait extérieure de l'élément rotatif auxiliaire (112) s'étend vers l'extérieur plus loin qu'une portion tout à fait extérieure de l'élément rotatif principal (111) uniquement afin de maintenir un contact avec un plancher.
